# EUROPÄISCHE PATENTSCHRIFT

(11) **EP 1 193 138 B1**
(45) Veröffentlichungstag und Bekanntmachung des Hinweises auf die Patenterteilung: **15.06.2005**
(21) Anmeldenummer: 01127584.9
(22) Anmeldetag: 13.07.1999
(51) Int. Cl.: B60R 21/16

(54) **Verfahren und Vorrichtung zum Falten eines aufblasbaren Luftsacks**
Method and means of folding an inflatable air bag
Procédé et dispositif pour le pliage d'un sac de sécurité gonflable

(30) Priorität: 14.07.1998 DE 19831613
(43) Veröffentlichungstag der Anmeldung: 03.04.2002
(62) Teilanmeldung aus: 99113733.2
(73) Patentinhaber: Delphi Technologies, Inc., Troy, MI 48007 (US)
(72) Erfinder: Kleeberger, Peter, 81543 München (DE); Strasser, Christian, 85622 Feldkirchen (DE); Shaw, William T., Dayton, Ohio 45458 (US)
(74) Vertreter: Manitz, Finsterwald & Partner

(56) Entgegenhaltungen:
- EP-A- 0 825 072
- WO-A-97/12782
- DE-A- 19 535 564

## Beschreibung

Die Erfindung betrifft ein Verfahren sowie eine Vorrichtung zum Falten eines aufblasbaren Luftsacks für Kraftfahrzeuge.

Derartige Verfahren und Vorrichtungen dienen dazu, einen aufblasbaren Luftsack auf eine Größe zusammenzufalten, die es gestattet, den gefalteten Luftsack als Teil eines Luftsackmoduls beispielsweise als Fahrer-, Beifahrer- oder Seitenairbag an einem Fahrzeug zu montieren. Hierbei muss der Luftsack so gefaltet werden, dass er sich beim Aufblasen in einem Crashfall so schnell wie möglich und ohne Beschädigungen der Luftsackhülle entfalten kann.

Aus der DE 195 36 625 A1 ist es bekannt, einen Luftsack ringförmig zu falten, wobei das offene und das geschlossene Ende des Luftsacks bereits zu Beginn des Faltvorgangs zusammengeführt werden.

Aus der DE 195 35 564 A1 ist es bekannt, einen auf einer horizontalen Fläche ausgebreiteten Luftsack innerhalb eines festgelegten Höhenprofils auf ein Zentrum hin zusammenzuraffen.

Aus der EP-A-0 825 072 ist ein Verfahren zum Falten eines aufblasbaren Luftsacks (sowie eine Vorrichtung zur Durchführung des Verfahrens) bekannt, bei der: ein zu faltender Luftsack mit seinem offenen Ende an einem Träger befestigt wird; ein zylindrischer Stempel wird durch eine Öffnung im Träger hindurch in den Luftsack hinein gegen das geschlossene Enden des Luftsacks vorgeschoben; Bereiche des Luftsacks werden hochgeklappt und gefaltet; der Stempel wird in eine Hülse eingebracht, indem die Hülse über den Luftsack geschoben wird; danach wird der gefaltete Luftsack gegenläufig verdreht und zusammengedrückt. Bei diesem Verfahren findet eine regelmäßige Luftsackfaltung fast ausschließlich außerhalb der Hülse statt.

Aus der WO-A-98/22311 ist eine Vorrichtung zum Falten eines aufblasbaren Luftsacks (und ein entsprechendes Verfahren) bekannt, bei der ein Gehäuse vorgesehen ist, in dem ein hinsichtlich Form und Größe der freien inneren Querschnittsfläche der Gehäuseinnenwand entsprechender Packstempel verschiebbar angeordnet ist. Im Zentrum des Packstempels ist eine Faltlanze geführt, die relativ zum Packstempel verfahrbar ist. Zwischen der Faltlanze und der Gehäusewand ist am Packstempel ein umlaufendes Faltelement vorgesehen. Die Faltung erfolgt in der Weise, daß der Gassack in das Gehäuse eingeschoben wird und im unteren Bereich am Gehäuse in einer nicht näher beschriebenen Weise befestigt wird. Anschließend wird ein Faltdorn durch die Einblasöffnung des Luftsacks in den Luftsack hinein gegen das geschlossene Ende des Luftsacks vorgeschoben. Nunmehr wird die Faltlanze in eine Aussparung des Faltdorns bewegt und dabei eine erste innere Teleskopfalte gebildet. Anschließend wird das Innere des Gassackes mit Druckluft beaufschlagt und in einem nächsten Schritt wird der Packstempel in Richtung des Faltdorns bewegt und dabei eine zweite Teleskopfalte gebildet. Anschließend werden der Packstempel, die Faltlanze und der Faltdorn in Richtung der Einblasöffnung bewegt, wobei ein von der Gehäuseinnenwand, dem Packstempel und dem Faltdorn begrenzter Raum verkleinert wird, bis der Luftsack auf seine endgültige Packungsgröße zusammengedrückt ist. Dabei legt sich das restliche, bisher nicht gefaltete Gassackgewebe um die Teleskopfalten in unregelmäßigen Falten.

Es ist das der Erfindung zugrunde liegende Problem (Aufgabe), ein Verfahren sowie eine Vorrichtung zum Falten eines aufblasbaren Luftsacks zu schaffen, mit denen ein Luftsack möglichst einfach und schnell derart zusammenfaltbar ist, dass er sich im Crashfall optimal entfalten kann.

Die Lösung dieser Aufgabe erfolgt durch die Merkmale des das Faltverfahren betreffenden Anspruchs 1.

Durch das Einschieben des Stempels in den Luftsack ist dann, wenn der Träger und der Stempel in die Hülse eingebracht sind, zwischen der Innenwand der Hülse und dem Stempel ein als Faltraum oder Faltkanal dienender Ringraum vorhanden, in welchem die Luftsackhülle in einer Richtung parallel zum Stempel auf die gewünschte Höhe zusammengedrückt wird. Die dadurch entstehende ringförmige Faltung des Luftsacks ermöglicht ein radiales Entfalten der Luftsackhülle.

Erfindungsgemäß muss die Faltung des Luftsacks nicht innerhalb eines Raumes mit vorgegebener Höhe stattfinden. Außerdem wird der Luftsack bzw. die Luftsackhülle nicht zwangsläufig in einer definierten und vorhersagbaren Weise zusammengelegt, sondern zusammengedrückt oder zusammengeknüllt, so dass eine zwar ringförmige, ansonsten aber willkürliche oder "chaotische", auch als Scrunch Fold bezeichnete Faltung entsteht, die dennoch ein schnelles und optimales Entfalten des Luftsacks in radialer Richtung ermöglicht. Die Erfindung ermöglicht es, beim Zusammendrücken des Luftsacks eine hinterschnittarme Faltung zu erzielen, die ein radiales Entfalten des Luftsacks ermöglicht, wodurch das Verletzungsrisiko für die Fahrzeuginsassen minimiert wird. Des weiteren muss durch das Vorsehen des Stempels beim Zusammendrücken des Luftsacks der Gasgenerator nicht mit einbezogen werden.

Obwohl mit der Erfindung grundsätzlich für beliebige Anwendungszwecke geeignete Luftsäcke gefaltet werden können, wird die Erfindung bevorzugt in Verbindung mit Fahrerairbags eingesetzt.

Es ist möglich, dass vor dem Zusammendrücken des Luftsacks auf die endgültige Packungsgröße der Luftsack ringförmig um den Stempel herum vom Träger herabhängt, so dass er sich bereits allein aufgrund seines eigenen Gewichts zunächst entfalten und dann insbesondere hinterschnittfrei oder zumindest hinterschnittarm auf die gewünschte Höhe zusammengedrückt werden kann.

Gemäß einer bevorzugten Ausführungsform der Erfindung wird der Stempel gegen das geschlossene Ende des Luftsacks vorgeschoben, bis ein oder mehrere im Inneren des Luftsacks angeordnete, bevorzugt bandartige Verbindungselemente, welche das geschlossene Ende des Luftsacks mit dem offenen Ende des Luftsacks oder mit dem Träger verbinden, gespannt sind.

Hierdurch wird das geschlossene Ende des Luftsacks während des Faltvorgangs auf einer durch den Stempel definierten Faltachse festgehalten, so dass es ein Zentrum definiert, um welches die Luftsackhülle ringförmig in Falten gelegt wird. Die Gefahr, dass das geschlossene Ende des Luftsacks in eine Position seitlich versetzt zur Faltachse und damit in den Bereich der ringförmig gefalteten Luftsackhülle gerät, was zu einem undefinierten, nicht mehr radialen Entfalten des Luftsacks führen würde, wird auf diese Weise vermieden.

Gemäß einem weiteren bevorzugten Ausführungsbeispiel der Erfindung wird vor dem Zusammendrücken des Luftsacks auf seine endgültige Packungsgröße der Stempel in eine Endstellung in der Nähe eines Bodenelements und bevorzugt derart nahe an das Bodenelement heran bewegt, dass ein Bereich des geschlossenen Endes des Luftsacks gegen das Bodenelement gedrückt wird.

Hierdurch ist sichergestellt, dass sich lediglich eine einzige Lage der Luftsackhülle zwischen dem Bodenelement und dem Gasgenerator befindet, der nach Abschluss des Faltvorgangs in den durch den Stempel freigehaltenen Raum eingesetzt wird.

Die Lösung des der Erfindung zugrunde liegenden Problems (Aufgabe) erfolgt außerdem durch die Merkmale des die Faltvorrichtung betreffenden Anspruchs 6.

Durch die Erfindung wird eine einfach aufgebaute und variabel einsetzbare Faltvorrichtung geschaffen, welche einen Raum mit veränderlicher Höhe bereitstellt und mit welcher der Luftsack bzw. die Luftsackhülle auf eine beliebige Höhe zusammengedrückt werden kann, ohne dass dabei der Gasgenerator mit einbezogen werden muss.

Gemäß einer bevorzugten Ausführungsform der Erfindung ist ein Trägerelement des Trägers lösbar mit einer bevorzugt eine Basisplatte und/oder ein vorzugsweise ringförmiges Halteelement umfassenden Baugruppe eines Luftsackmoduls verbunden, wobei bevorzugt die Basisplatte hinsichtlich Form und Größe der freien inneren Querschnittsfläche der Hülse entspricht.

Der Träger zur Befestigung des zu faltenden Luftsacks wird hierbei durch die Basisplatte, das Halteelement und das Trägerelement gebildet, so dass dann, wenn nach Abschluss des Faltvorgangs die Verbindung zwischen dem Trägerelement und der Basisplatte bzw. dem Halteelement gelöst wird, eine wesentliche Baugruppe des Luftsackmoduls fertig gestellt ist.

Weitere vorteilhafte Ausführungsformen der Erfindung betreffend sowohl das Faltverfahren als auch die Faltvorrichtung sind in den Unteransprüchen, der Beschreibung und der Zeichnung angegeben.

Die Erfindung wird im folgenden beispielhaft anhand der Zeichnung beschrieben. Es zeigen:

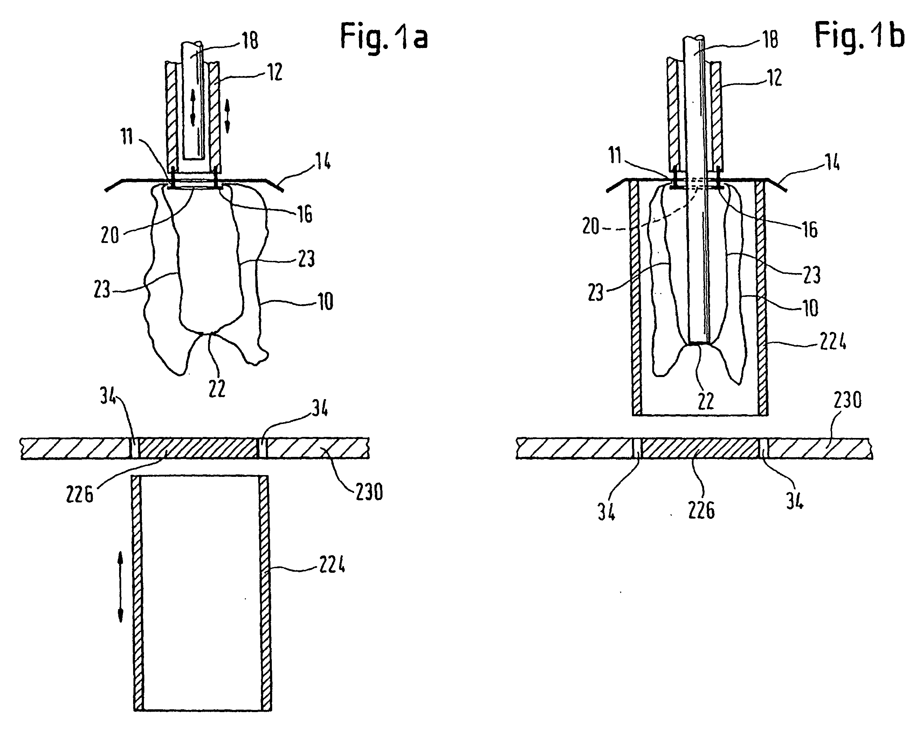

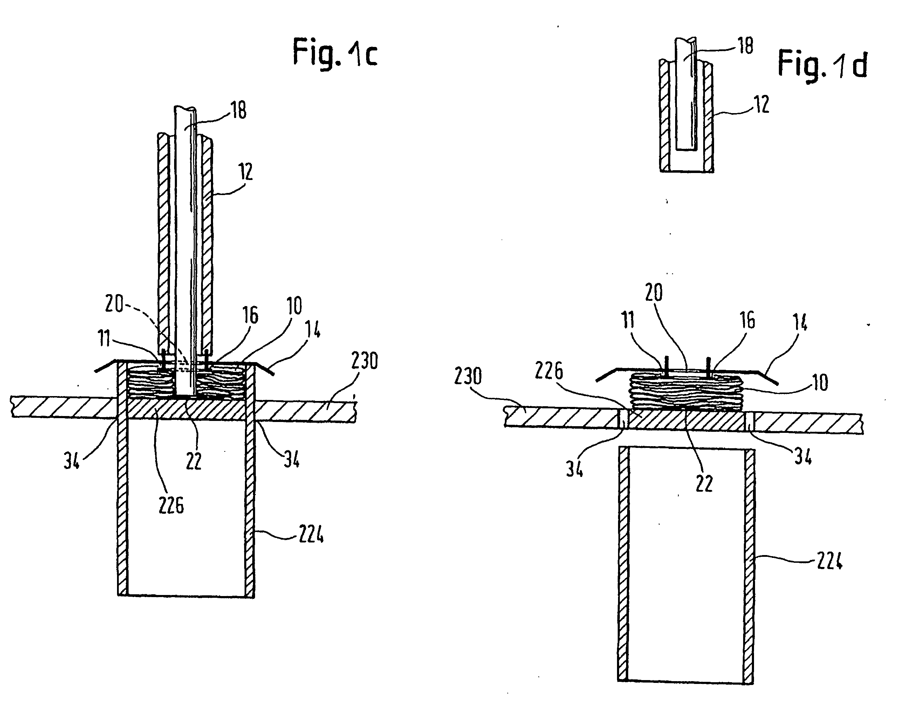

- Fig. 1a -1d: eine Seitenansicht einer Ausführungsform einer erfindungsgemäßen Faltvorrichtung in verschiedenen Phasen eines erfindungsgemäßen Faltverfahrens,

In den Fig. 1a bis 1d ist eine Ausführungsform einer erfindungsgemäßen Faltvorrichtung dargestellt, die zur Durchführung eines erfindungsgemäßen Faltverfahrens vorgesehen ist.

Die in den Fig. 1a bis 1d dargestellte Faltvorrichtung umfasst gemäß Fig. 1a ein Bodenelement 226 welches Bestandteil einer eine horizontal verlaufenden Arbeitsplatte 230 ist.

Oberhalb der Arbeitsplatte 230 ist ein Trägerelement 12 angeordnet, das an seiner Unterseite eine Basisplatte 14 sowie ein ringförmiges, im folgenden als Haltering bezeichnetes Halteelement 16 eines Luftsackmoduls trägt. Zusammen mit der Basisplatte 14 und dem Haltering 16 bildet das Trägerelement 12 einen Träger, an dem ein zu faltender Luftsack 10 mit seinem offenen Ende 11, das auch als Mundstück des Luftsacks 10 bezeichnet wird, befestigt ist.

Der Luftsack 10 ist mit seinem das Mundstück begrenzenden Bereich der Luftsackhülle um eine kreisförmige Öffnung 20 herum angeordnet, die in der Basisplatte 14 und im Haltering 16 ausgebildet ist.

Ein zylindrischer Stempel 18 ist relativ zum Träger in vertikaler Richtung bewegbar und durch das röhrenförmig ausgebildete Trägerelement 12 und die in der Basisplatte 14 und dem Haltering 16 vorgesehene Öffnung 20 hindurch in den Luftsack 10 hinein verschiebbar.

Der Durchmesser des Stempels 18 und der Durchmesser der Öffnung 20 entsprechen zumindest im wesentlichen dem Durchmesser eines im montagefertigen Luftsackmodul vorgesehenen, nicht dargestellten Gasgenerators.

Das geschlossene Ende 22 des zu faltenden Luftsacks 10 ist über mehrere, bevorzugt zwei oder vier bandartige Verbindungselemente 23 entweder mit dem das Mundstück des Luftsacks 10 bildenden Bereich der Luftsackhülle oder mit der Basisplatte 14 bzw. dem Haltering 16 derart verbunden, dass das geschlossene Ende 22 bzw. ein Bereich des geschossenen Endes 22 des Luftsacks 10 unterhalb der Öffnung 20, d. h. auf einer durch die Längsachse des Stempels 18 definierten Faltachse angeordnet ist.

Die Länge der Verbindungselemente 23 ist derart gewählt, dass die Luftsackhülle 10 um ihr geschlossenes Ende 22 herum bis unterhalb des durch das geschlossene Ende 22 definierten Höhenniveaus herabhängen kann.

Ein erfindungsgemäßes Faltverfahren, das mit der vorstehend erläuterten Faltvorrichtung durchführbar ist, wird im folgenden anhand der Fig. 1a - 1d beschrieben.

Der zu faltende Luftsack 10 wird zunächst in der vorstehend beschriebenen Art und Weise an der Basisplatte 14 bzw. am Haltering 16 mit seinem offenen Ende 11 befestigt, so dass die Luftsackhülle gemäß Fig. 1a von der Basisplatte 14 bzw. dem Haltering 16 herabhängt. Zu Beginn des Faltverfahrens ist der Luftsack 10 folglich mit der Basisplatte 14 verbunden.

Anschließend wird der Stempel 18 in den Luftsack 10 hinein und gegen das geschlossene Ende 22 geschoben, bis die Verbindungselemente 23 gespannt sind, wie es in Fig. 1b dargestellt ist. Vor, nach oder mit der Vorschubbewegung des Stempels 18 in den Luftsack 10 hinein wird das Trägerelement 12 abgesenkt.

Im Anschluss wird die gemäß Fig. 1a zunächst unterhalb der Arbeitsplatte 230 angeordnete Hülse 224 durch zwischen dem Bodenelement 226 und dem angrenzenden Bereich der Arbeitsplatte 230 ausgebildete Aussparungen 34 hindurch über das Bodenelement 226 und um den herabhängenden Luftsack 10 herum nach oben geschoben, bis sie gegen die Basisplatte 14 stößt und der in Fig. 1b dargestellte Zustand erreicht ist.

Anschließend wird die gesamte Anordnung in Richtung des Bodenelementes 226 abgesenkt, wobei das Trägerelement 12 mittels der Basisplatte 14 die Hülse 224 wieder zurück durch die Aussparungen 34 hindurch nach unten schiebt.

Dabei gelangt zunächst der Stempel 18 unter Zwischenlage des geschlossenen Endes 22 des Luftsacks 10 in Anschlag am Bodenelement 226, woraufhin beim weiteren Absenken des Trägerelementes 12 der Luftsack 10 innerhalb des ringförmigen Faltraumes auf seine endgültige Packungsgröße zusammengedrückt wird, wie es in Fig. 1c dargestellt ist.

Nach dem Lösen der Verbindung zwischen dem Trägerelement 12 und der Basisplatte 14 bzw. dem Haltering 16 und dem Zurückfahren des Trägerelementes 12 und des Stempels 18 kann der gemäß Fig. 1d auf dem Bodenelement 226 liegende zusammengedrückte Luftsack 10 zusammen mit der Basisplatte 14 und dem Haltering 16 in eine Luftsackmodul-Abdeckung eingesetzt, mit einem Gasgenerator versehen und in einem Fahrzeug montiert werden.

### Bezugszeichenliste

- 10: Luftsack, Luftsackhülle
- 11: offenes Ende des Luftsacks
- 12: Trägerelement
- 14: Basisplatte
- 16: Haltering
- 18: Stempel
- 20: Öffnung
- 22: geschlossenes Ende des Luftsacks
- 23: Verbindungselemente
- 224: Hülse
- 226: Bodenelement
- 230: Arbeitsplatte
Biegeelemente
- 34: Aussparungen

## Patentansprüche

1. Verfahren zum Falten eines aufblasbaren Luftsacks (10) für Kraftfahrzeuge, welches die Schritte umfasst, dass ein zu faltender Luftsack (10) mit seinem offenen Ende (11) an einem Träger (12, 14, 16) befestigt wird, dass ein bevorzugt im wesentlichen zylindrischer Stempel (18) durch eine Öffnung (20) im Träger (12, 14, 16) hindurch in den Luftsack (10) hinein gegen das geschlossene Ende (22) des Luftsacks (10) vorgeschoben wird, und dass der Stempel (18) in eine Hülse (224) eingebracht wird, indem die Hülse (224) über den Luftsack (10) gegen ein Teil (14) des Trägers (12, 14, 16) geschoben wird, wobei nach dem Einbringen des Stempels (18) in die Hülse (224) die dadurch gebildete Einheit als Ganzes in Richtung eines feststehend angeordneten Bodenelementes (226) bewegt und die Hülse (224) über das Bodenelement (226) geschoben wird, und wobei der Luftsack (10) dadurch unregelmäßig zusammengedrückt wird, dass ein von dem Teil (14) des Träger (12, 14, 16), dem Stempel (18), der Hülseninnenwand und dem Bodenelement (226) begrenzter Raum verkleinert wird, bis der Luftsack (10) auf seine endgültige Packungsgröße zusammengedrückt ist.

2. Verfahren nach Anspruch 1,
**dadurch gekennzeichnet,**
**dass** der Luftsack (10) mit seinem offenen Ende (11) an einer bevorzugt eine Basisplatte (14) und/oder ein vorzugsweise ringförmiges Halteelement (16) umfassenden Baugruppe eines Luftsackmoduls befestigt wird, wobei eine Verbindung zwischen der Baugruppe und einem Trägerelement (12) des Trägers gelöst wird, nachdem der Luftsack (10) auf seine endgültige Packungsgröße zusammengedrückt ist.

3. Verfahren nach zumindest einem der vorhergehenden Ansprüche,
**dadurch gekennzeichnet,**
**dass** der Stempel (18) gegen das geschlossene Ende (22) des Luftsacks (10) vorgeschoben wird, bis ein oder mehrere im Inneren des Luftsacks (10) angeordnete, bevorzugt bandartige Verbindungselemente (23), welche das geschlossene Ende (22) des Luftsacks (10) mit dessen offenem Ende (11) oder mit dem Träger (12, 14, 16) verbinden, gespannt sind.

4. Verfahren nach zumindest einem der vorhergehenden Ansprüche,
**dadurch gekennzeichnet,**
**dass** vor dem Zusammendrücken des Luftsacks (10) auf seine endgültige Packungsgröße der Stempel (18) in eine Endstellung in der Nähe des Bodenelementes (226) und bevorzugt derart nahe an das Bodenelement (226) heran bewegt wird, dass ein Bereich des geschlossenen Endes (22) des Luftsacks (10) gegen das Bodenelement (226) gedrückt wird.

5. Verfahren nach zumindest einem der vorhergehenden Ansprüche,
**dadurch gekennzeichnet,**
**dass** die Hülse (224) über das Bodenelement (226) geschoben wird, bis der Abstand zwischen dem Träger (12, 14, 16) und dem Bodenelement (226) der endgültigen Packungshöhe des zusammengedrückten Luftsacks (10) entspricht.

6. Vorrichtung zur Durchführung eines Verfahrens zum Falten eines aufblasbaren Luftsacks für Kraftfahrzeuge nach zumindest einem der vorhergehenden Ansprüche, mit einem Träger (12, 14, 16), an dem ein zu faltender Luftsack (10) mit seinem offenen Ende (11) befestigbar ist, einem bevorzugt im wesentlichen zylindrischen Stempel (18), der durch eine im Träger (12, 14, 16) ausgebildete Öffnung (20) in den Luftsack (10) hinein gegen das geschlossene Ende (22) des Luftsacks (10) vorschiebbar ist, und einer Hülse (224), in die der Stempel (18) einbringbar ist, indem die Hülse (224) über den Luftsack (10) gegen ein Teil (14) des Trägers (12, 14, 16) schiebbar ist, wobei die dadurch gebildete Einheit als Ganzes in Richtung eines feststehend angeordneten Bodenelementes (226) bewegbar ist, wobei die Hülse (224) über das Bodenelement (226) schiebbar ist, und wobei zum unregelmäßigen Zusammendrücken des Luftsacks (10) auf seine endgültige Packungsgröße das Teil (14) des Trägers (12, 14, 16), der Stempel (18), die Hülse (224) und das Bodenelement (226) relativ zueinander derart bewegbar sind, dass ein von ihnen begrenzter Raum verkleinerbar ist.

7. Vorrichtung nach Anspruch 6,
**dadurch gekennzeichnet,**
**dass** ein Trägerelement (12) des Trägers lösbar mit einer bevorzugt eine Basisplatte (14) und/oder ein vorzugsweise ringförmiges Halteelement (16) umfassenden Baugruppe eines Luftsackmoduls verbunden ist.

8. Vorrichtung nach Anspruch 6 oder 7,
**dadurch gekennzeichnet,**
**dass** der Querschnitt des Stempels (18) hinsichtlich Form und Größe zumindest im wesentlichen demjenigen eines Gasgenerators für den Luftsack (10) entspricht.

## Claims

1. Method for folding an inflatable air bag (10) for motor vehicles comprising the steps that an air bag (10) to be folded is fastened by its open end (11) to a support (12, 14, 16), that a preferably substantially cylindrical plunger (18) is pushed forward through an opening (20) in the support (12, 14, 16) into the air bag (10) and against the closed end (22) of the air bag (10) and that the plunger (18) is introduced into a sleeve (224) in that the sleeve (224) is pushed over the air bag (10) against a part (14) of the support (12, 14, 16), wherein after introducing the plunger (18) into the sleeve (224) the unit formed by this means is moved as a whole towards a fixedly arranged base element (226) and the sleeve (224) is pushed over the base element (226) and wherein the air bag (10) is irregularly compressed by this means that a space bounded by the part (14) of the support (12, 14, 16), the plunger (18), the inner wall of the sleeve and the base element (226) is reduced until the air bag (10) is compressed to its final packing size.

2. Method according to claim 1, **characterised in that** the air bag (10) is fastened by its open end (11) to a subassembly of an air bag module preferably comprising a base plate (14) and/or a preferably annular retaining element (16), wherein a connection between the subassembly and a support element (12) of the support is detached once the air bag (10) is compressed to its final packing size.

3. Method according to at least one of the preceding claims, **characterised in that** the plunger (18) is pushed forward against the closed end (22) of the air bag (10) until one or more preferably ribbon-like connecting elements (23) arranged in the interior of the air bag (10) and connecting the closed end (22) of the air bag (10) to the open end (11) of the latter or to the support (12, 14, 16) are tensioned.

4. Method according to at least one of the preceding claims, **characterised in that** prior to the compression of the air bag (10) to its final packing size the plunger (18) is moved into an end position in the vicinity of the base element (226) and preferably so close to the base element (226) that a region of the closed end (22) of the air bag (10) is pressed against the base element (226).

5. Method according to at least one of the preceding claims, **characterised in that** the sleeve (224) is pushed over the base element (226) until the spacing between the support (12, 14, 16) and the base element (226) corresponds to the final packing height of the compressed air bag (10).

6. Device for carrying out a method for folding an inflatable air bag for motor vehicles according to at least one of the preceding claims having a support (12, 14, 16) to which an air bag (10) is fastenable by its open end (11), a preferably substantially cylindrical plunger (18) which is **advanceable** through an opening (20) constructed in the support (12, 14, 16) into the air bag (10) and against the closed end (22) of the air bag and a sleeve (224) into which the plunger (18) is introduceable in that the sleeve (224) is pushable over the air bag (10) against a part (14) of the support (12, 14, 16), wherein the unit formed by this means is moveable as a whole in the direction of a fixedly arranged base element (226), wherein the sleeve (224) is pushable over the base element (226) and wherein for the irregular compression of the air bag (10) to its final packing height the part (14) of the support (12, 14, 16), the plunger (18), the sleeve (224) and the base element (226) are movable relative to one another in such a way that a space bounded by them is reducible.

7. Device according to claim 6, **characterised in that** a support element (12) of the support is detachably connected to a subassembly of an air bag module preferably comprising a base plate (14) and/or a preferably annular retaining ring (16).

8. Device according to claim 6 or 7, **characterised in that** with regard to shape and size the cross-section of the plunger (18) coincides substantially with that of a gas generator for the air bag (10).

## Revendications

1. Procédé de pliage d'un coussin de sécurité gonflable (10) pour véhicules à moteur, qui comprend les étapes suivantes : un coussin de sécurité à plier (10) est fixé par son extrémité ouverte (11) sur un support (12,14,16), un piston de préférence sensiblement cylindrique (18) est déplacé en avant à travers une ouverture (20) du support (12, 14,16) dans le coussin de sécurité (10) contre l'extrémité fermée (22) du coussin de sécurité (10) et le piston (18) est inséré dans une douille (224), la douille étant poussée via le coussin de sécurité (10) contre une partie (14) du support (12,14,16), dans lequel, après l'insertion du piston (18) dans la douille (224), l'unité formée de la sorte se déplace comme un tout dans le sens d'un élément de fond aménagé de manière fixe (226) et la douille (224) est poussée via l'élément de fond (226) et dans lequel le coussin de sécurité est de la sorte comprimé de manière irrégulière de sorte qu'un espace délimité par le support (12,14,16), le piston (18), la paroi interne de la douille et un élément de fond (26, 126) soit réduit jusqu'à ce que le coussin de sécurité (10) soit comprimé à sa dimension de tassement finale.

2. Procédé selon la revendication 1, **caractérisé en ce que** le coussin de sécurité (10) est fixé par son extrémité ouverte (11) à un bloc d'un module de coussin de sécurité comprenant de préférence une plaque de base (14) et/ou un élément de retenue de préférence annulaire (16), une liaison entre le bloc et un élément porteur (12) du support étant défaite après que le coussin de sécurité (10) a été comprimé à sa dimension de tassement finale.

3. Procédé selon au moins l'une quelconque des revendications précédentes, **caractérisé en ce que** le piston (18) est déplacé en avant contre l'extrémité fermée (22) du coussin de sécurité (10) jusqu'à ce que soient tendus un ou plusieurs éléments de liaison de préférence en forme de bande (23) agencés à l'intérieur du coussin de sécurité (10), qui relient l'extrémité fermée (22) du coussin de sécurité (10) à son extrémité ouverte (11) ou au support (12, 14, 16).

4. Procédé selon au moins l'une quelconque des revendications précédentes, **caractérisé en ce que** avant la compression du coussin de sécurité (10) à sa dimension de tassement finale, le piston (18) est déplacé dans une position finale au voisinage d'un élément de fond (226) et, de préférence, assez près de l'élément de fond (226) pour qu'une zone de l'extrémité fermée (22) du coussin de sécurité (10) soit pressée contre l'élément de fond (226).

5. Procédé selon au moins l'une quelconque des revendications précédentes, **caractérisé en ce que** la douille (224) est poussée via l'élément de fond (226) jusqu'à ce que la distance entre le support (12, 14, 16) et l'élément de fond (226) corresponde à la hauteur de tassement définitive du sac de sécurité comprimé (10).

6. Dispositif permettant de réaliser un procédé pour le pliage d'un coussin de sécurité gonflable pour véhicules automobiles selon au moins l'une quelconque des revendications précédentes, comprenant un support (12, 14, 16), sur lequel peut être fixé un coussin de sécurité à plier (10) par son extrémité ouverte (11), un piston de préférence sensiblement cylindrique (18), qui peut être déplacé en avant à travers une ouverture (20) ménagée dans le support (12, 14,16) dans le coussin de sécurité (10) contre l'extrémité fermée (22) du coussin de sécurité (10), et une douille (224), dans laquelle le piston (18) peut être introduit, la douille (224) pouvant se déplacer via le coussin de sécurité (10) contre une partie (14) du support (12,14,16), l'unité alors formée pouvant être déplacée comme un ensemble en direction d'un élément de fond aménagé de manière fixe (226), la douille (224) pouvant se déplacer via l'élément de fond (226) et, pour la compression irrégulière du coussin de sécurité (10) à sa taille de tassement définitive, la partie (14) du support (12, 14, 16), le piston (18), la douille (224) et l'élément de fond (226) pouvant être déplacés les uns par rapport aux autres de sorte qu'on puisse réduire un espace limité par eux.

7. Dispositif selon la revendication 6, **caractérisé en ce qu'**un élément porteur (12) du support est relié de manière amovible à un bloc d'un module de coussin de sécurité comprenant, de préférence, une plaque de base (14) et/ou un élément de retenue (16) de préférence annulaire.

8. Dispositif selon la revendication 6 ou 7, **caractérisé en ce que** la section transversale du piston (18) correspond en forme et en dimensions au moins sensiblement à celle d'un générateur de gaz pour le coussin de sécurité (10).
